Europäisches Patentamt

European Patent Office

Office européen des brevets

(11) Publication number: **0 441 525 A2**

# EUROPEAN PATENT APPLICATION

(21) Application number: **91300714.2**

(22) Date of filing: **30.01.91**

(51) Int. Cl.⁵: **F25D 29/00, H01R 13/707**

(30) Priority: **09.02.90 JP 12554/90**

(43) Date of publication of application:
**14.08.91 Bulletin 91/33**

(84) Designated Contracting States:
**DE FR GB IT SE**

(71) Applicant: **SANDEN CORPORATION**
**20 Kotobuki-cho**
**Isesaki-shi Gunma, 372(JP)**

(72) Inventor: **Akabane, Hidemitsu**
**880 Kami-Namie-cho**
**Takasaki-shi, Gunma, 370(JP)**
Inventor: **Isobe, Toshimi**
**2263-2 Toyoshire-cho**
**Isesaki-shi, Gunma, 372(JP)**

(74) Representative: **Brunner, Michael John et al**
**GILL JENNINGS & EVERY 53-64 Chancery**
**Lane**
**London WC2A 1HN(GB)**

(54) Safety mechanism for vehicle container refrigerator.

(57) A safety mechanism for a refrigerator (5) for a vehicle container (2), is provided, the refrigerator (5) being mounted on the container (2) and having a motor operated compressor (6), which is supplied with a motor-driving current through a main current route extending from an alternating current generator (3) provided on the vehicle (1) or an external power source (40) to the motor operated compressor (6). The main current route has a connector (22,14,15) provided in a connection box (25) with a door (30). A door switch (32) which is on-off operated depending on the opening and closing operations of the door (30) of the connection box (25), and a control unit (16) which controls the main current route in accordance with the operation of the door switch (32) to its continuity condition when the door (30) is closed and to its break condition when the door (30) is opened, are provided in the safety mechanism. Since the main current route is broken when the door (30) is opened before the connector (22,14,15) is cut off, the main current is cut off when the switch is opened and arcing is prevented between the contacts in the connector (22,14,15).

FIG. I

EP 0 441 525 A2

## SAFETY MECHANISM FOR VEHICLE CONTAINER REFRIGERATOR

The present invention relates to a safety mechanism for a refrigerator for a vehicle container, and more particularly to a safety mechanism for safely breaking a main current to a motor operated compressor of the refrigerator mounted on the container.

Vehicles to which a container with a refrigerator may be separably joined, are well known. In such a conventional vehicle with a container, an alternating current generator driven by an engine is provided in the vehicle, a motor operated compressor and an exciting current supplying circuit for the excitation of the alternating current generator are provided in the container, and the refrigerator is driven by electrical power sent to the container from either the alternating current generator or an external power source (for example, a commercial power source).

In such a refrigerated container, a connector is provided to allow the cable connection extending between the vehicle and the container to be broken, and a main current route from the alternating current generator and an exciting current route to the alternating current generator are simultaneously broken by disconnecting the cable connection.

In such a conventional mechanism, however, since the main current to the compressor of the refrigerator is directly broken by the operation of breaking the connection when the power is being supplied from the alternating current generator to the container, an arc may be generated between contacts in the connector and the contacts are liable to be burnt by the arc. Also when the external power source is used, there is a similar problem.

Accordingly, it would be desirable to provide a safety mechanism for a refrigerator for a vehicle with a container, which can prevent a main current to the refrigerator from being directly broken by the operation of opening off a connector, thereby preventing generation of arc and burning of contacts of the connector.

A safety mechanism for a refrigerator for a vehicle with a container according to the present invention is herein provided.

The container is joined to the vehicle separably from the vehicle, and the refrigerator is mounted on the container and has a motor-operated compressor for compressing a cooling medium. A motor driving current is supplied to the motor-operated compressor through a main current route extending from an alternating current generator provided in the vehicle or an external power source to the motor-operated compressor. The main current route has a connector provided in a connection box with a door positioned between the container and the vehicle or the external power source. A door switch and a control unit are provided in the mechanism. The door switch is on-off operated depending on the opening and closing operations of the door of the connection box, and the control unit controls the main current route in accordance with the operation of the door switch to its continuity condition when the door is closed and to its break condition when the door is opened.

In such a safety mechanism, when the door of the connection box is opened in order to cut off the connector, the door switch is operated and the control unit controls the main current route in accordance with the operation of the door switch to its break condition. Therefore, when the connector is disconnected after the door is opened, the main current route has been already broken and the main current does not flow. As a result, arc is not generated when the connector is disconnected, and the burning of the contacts of the connector does not occur.

The breaking of the main current route may be performed by, for example, stopping the supply of an exciting current to the alternating current generator to stop the generation of a voltage of the generator, stopping the supply of a motor driving current to the motor-operated compressor through a motor control circuit, or controlling both such operations, as shown in the embodiments described later.

Some preferred exemplary embodiments of the invention will now be described with reference to the accompanying drawings, which are given by way of example only, and are not intended to limit the present invention. In the drawings:-

FIG. 1 is a block diagram of an electric system of a vehicle with a container;

FIG. 2 is a schematic side view of the vehicle with the container shown in FIG. 1; and,

FIG. 3 is a perspective view of a portion of a connector and a connection box of the electric system shown in FIG. 1.

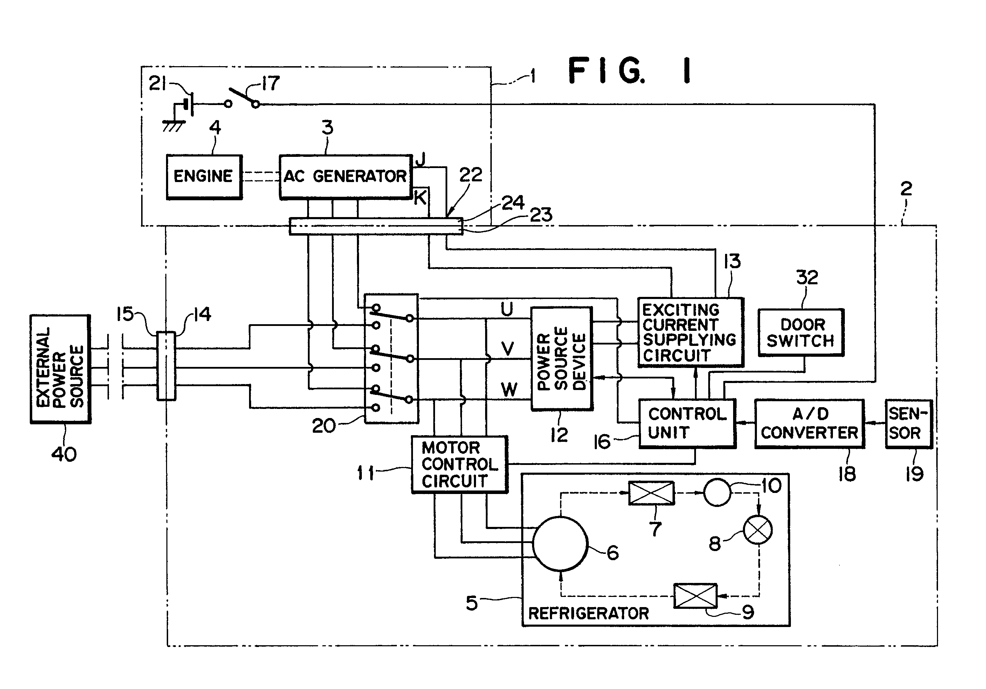

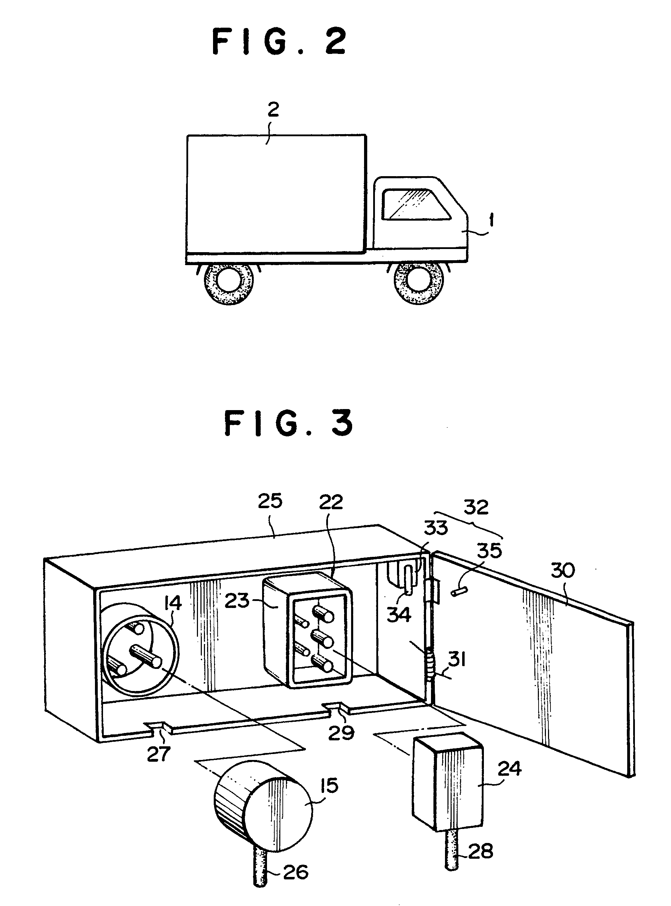

FIG. 1 shows an electrical system of a vehicle 1 with a container 2. Usually, container 2 is joined to vehicle 1 as shown in FIG. 2, and the container is separated from the vehicle as needed. An alternating current generator 3 is provided in vehicle 1, driven by an engine 4 and the generated electrical power is supplied to container 2.

A refrigerator 5 is mounted on container 2. The refrigerator 5 has a motor-operated compressor 6 for compressing a cooling medium, an outdoor heat exchanger 7 condensing the compressed cooling medium, an expansion valve 8 expanding and cooling the cooling medium from the outdoor heat exchanger, an indoor heat exchanger 9 evaporating the cooling medium from the expansion valve and sending a cooled air into the container, and a receiver dryer 10.

A motor control circuit 11, a power source unit 12 generating an excitation power for alternating current generator 3 and control power for various pieces of equipment, an exciting current supplying circuit 13 supplying an exciting current to the alternating current generator, a centralised control unit 16, and a power source switching device 20 are provided in container 2. Centralised control unit 16 controls the operations of motor control circuit 11, exciting current supplying circuit 13 and power source switching device 20 in accordance with the switching condition of an engine key switch 17, the detecting signals sent from sensors (for example, a temperature sensor 19) through an A/D converter (analog/digital converter) 18 and the on-off operation of a door switch 32 described later. Power source switching device 20 switches the current route of three phases U, V and W to motor-operated compressor 6 and exciting current supplying circuit 13 to a current route from either alternating current generator 3 or an external power source 40 (for example, a commercial power source), according to the signal from centralised controller 16. Engine key switch 17 is connected to a battery 19.

External power source 40 is connected to the container through a plug 14 and a plug receiver 15 for the external power source. Alternating current generator 3 is connected to the container through a connector 22 provided between vehicle 1 and container 2. Connector 22 has a connector piece 23 on the container side and a connector piece 24 on the vehicle side. Connector piece 23 and connector piece 24 are free to be connected to and separated from each other. Connector 22 can simultaneously connect or disconnect the cables of the three phases U, V and W, which constitute the main current route between alternating current generator 3 and power source switching device 20, and the cables of phases J and K, which constitute the exciting current route between alternating current generator 3 and exciting current supplying circuit 13.

FIG. 3 illustrates the connection portion shown in FIG. 1. A connection box 25 is attached to container 2, and plug 14 and connector piece 23 of connector 22 are fixed in the connection box. Plug receiver 15 can be connected to and separated from plug 14, and in the connection state, its cord 26 is led from the lower portion of connection box 25 to the outside through a slot 27 formed on the bottom of the box. Connector piece 24, on the vehicle side, simultaneously connects or disconnects the cables of the three phases U, V and W of the main current route and the cables of phases J and K of the exciting current route by the operation of connecting it to and separating it from connector piece 23. In the connection state, its cord 28 is led from the lower portion of connection box 25 to alternating current generator 3 side through a slot 29 formed on the bottom of the box.

Connection box 25 has a door 30 which is urged in its closing direction by a spring 31 to normally close the box. A door switch 32 is provided in or on connection box 25. In this embodiment, door switch 32 comprises a switch body 33 having an actuator 34 and a projection 35 actuating the actuator. Switch body 33 is attached in connection box 25, and projection 35 is attached on the back surface of door 30. When door 30 is closed, projection 35 pushes actuator 34 of switch body 33 and door switch 32 operates so as to be "on". When door 30 is opened, projection 35 separates from actuator 34 of switch body 33 and door switch 32 operates so as to be "off". The on-off signal of door switch 32 is sent to centralised control unit 16.

Table 1, Table 2 and Table 3 show examples of the control by centralised control unit 16.

In the control shown in Table 1, when the main current to motor-operated compressor 6 is to be supplied from alternating current generator 3, if door switch 32 operates so as to be "on" under the condition that motor control circuit 11 is "on" (i.e., the motor driving current can be sent), exciting current supplying circuit 13 becomes "on" (i.e., the exciting current for alternating current generator 3 is sent). If door switch 32 operates so as to be "off" under the same condition, exciting current supplying circuit 13 becomes "off" (i.e., the exciting current for alternating current generator 3 is stopped). In the control shown in Table 2, when the main current to motor operated compressor 6 is to be supplied from alternating current generator 3 or external power source 40, if door switch 32 operates to be "on", motor control circuit 11 becomes "on" (i.e., the motor driving current (main current) can be sent). If door switch 32 operates to be "off", motor control circuit 11 becomes "off" (i.e., the motor driving current (main current) is stopped).

## Table 1

| Door switch | Exciting current supplying circuit | Motor control circuit |
|---|---|---|
| ON | ON | ON |
| OFF | OFF | ON |

## Table 2

| Door switch | Motor control circuit |
|---|---|
| ON | ON |
| OFF | OFF |

Although the object of the present invention is basically achieved by the controls shown in the above Table 1 and/or Table 2, the mechanism shown in FIG. 1 has both control systems.

Namely, as shown in Table 3, when engine key switch 17 is in the ON condition, motor control circuit 11 is controlled to be "on". In this condition, if door switch 32 operates so as to be "on", exciting current supplying circuit 13 becomes "on". If door switch 32 operates so as to be "off" under the same condition, exciting current supplying circuit 13 becomes "off". when engine key switch 17 is in the OFF condition, exciting current supplying circuit 13 is controlled to be "off". In this condition, if door switch 32 operates so as to be "on", motor control circuit 11 becomes "on". If door switch 32 operates so as to be "off" under the same condition, motor control circuit 11 becomes "off".

## Table 3

| Engine key switch | Door switch | Exciting current supplying circuit | Motor control circuit |
|---|---|---|---|
| ON | ON | ON | ON |
| | OFF | OFF | ON |
| OFF | ON | OFF | ON |
| | OFF | OFF | OFF |

In such a control system, when connector 22 is in the connection condition, engine key switch 17 is "on" and power source switching device 20 switches the main current route to the alternating current generator 3, door 30 of connection box 25 is closed, door switch 32 is "on" and exciting current supplying circuit 13 and motor control circuit 11 are in the ON condition, i.e., continuity condition. In this condition, alternating current generator 3 is being driven or started to be driven by engine 4. At the initial time, alternating current generator 3 generates a small voltage by its residual magnetism, and thereafter, the alternating current generator generates a required constant voltage by the supply of the exciting current from exciting current supplying circuit 13. Motor-operated compressor 6 is driven and refrigerator 5 is operated.

In this condition, if door 30 of connection box 25 is opened in order to cut off connector 22, door switch 32 becomes "off". By this, the exciting current supplying circuit 13 becomes "off", the generation of the voltage by alternating current generator 3 is stopped because the supply of the exciting current is stopped. Thereafter, when connector 22 is cut off, arc does not occur between the contacts of connector pieces 23 and 24 because the main current has already become to be zero at that time.

When engine key switch 17 is "off" and power source switching device 20 switches the main current route to the plug 14 (external power source), if plug 14 is connected to plug receiver 15, door switch 32 is in the ON condition, but exciting current supplying circuit 13 becomes "off". Motor control circuit 11 is in the ON condition. Therefore, motor-operated compressor 6 is driven by the main current from external power source 40 and refrigerator 5 is operated.

In this condition, if door 30 of connection box 25 is opened in order to cut off the connection between plug 14 and plug receiver 15, door switch 32 becomes "off". Since the operation of motor control circuit 11 is stopped, the main current to motor-operated compressor 6 is stopped. Thereafter, when plug 14 and plug receiver 15 are cut off, arc does not occur between their contacts because the main current has already become zero by that time.

In this embodiment, although the operation of exciting current supplying circuit 13 is stopped by "off" operation of door switch 32 when power source switching device 20 is switched to the alternating current generator side, instead of this control system, the operation of motor control circuit 11 may be stopped. Also in this case, because connector pieces 23 and 24 are cut off under the condition that the main current becomes zero, arcing does not occur.

Furthermore, although power source switching device 20 is switched depending on the on-off operation of engine key switch 17, instead of this control system, the switching may be controlled according to the operation condition of engine 4 or the voltage output of alternating current generator 3 and external power source 40.

## Claims

1. A safety mechanism for a refrigerator (5) for a vehicle container (2) which is releasably connectable to a vehicle (1), the refrigerator (5) being mounted on the container (2) and having a motor operated compressor (6) for compressing a cooling medium, the motor operated compressor (6) being supplied with a motor-driving current through a main current route extending from an alternating current generator (3) on the vehicle (1) or an external power source (40) to the motor-operated compressor (6), through a connector (22,14,15) positioned between the container (2) and the vehicle (1) or the external power source (40) in a connection box (25) having a door (30), the safety mechanism being characterized by

   a door switch (32), on the connection box, which is on-off operated depending by opening and closing operations of the door (30), and

   a control unit (16) which controls the main current route, in accordance with the operation of the door switch (32), to its continuity condition when the door (30) is closed and to its break condition when the door (30) is opened.

2. A safety mechanism according to claim 1, wherein the container includes a motor control circuit (11) for driving the motor operated compressor; an exciting current supplying circuit (13) for the excitation of the alternating current generator (3); and a power source switching device (20) for switching the current route to the motor-operated compressor; and wherein the connector is arranged to connect and break the main current route between the alternating current generator (3) and the power source switching device (20) and an exciting current route between the alternating current generator (3) and the exciting current supplying circuit (13), the control unit (16) controlling the exciting current supplying circuit (13) in accordance with the operation of the door switch (32) to supply an exciting current to the alternating current generator (3) when the door (30) is closed and to stop the supply of the exciting current to the alternating current generator (3) when the door (30) is opened.

3. A safety mechanism according to claim 1 or claim 2, wherein the container includes a motor control circuit (11) for driving the motor operated compressor; an exciting current supplying circuit (13) for the excitation of the alternating current generator (3); and a power source switching device (20) for switching the current route to the motor-operated compressor; and wherein the connector is arranged to connect and break the main current route between the alternating current generator (3) and the power source switching device (20) and an exciting current route between the alternating current generator (3) and the exciting current supplying circuit (13), the control unit (16) controlling the motor control circuit (11) in accordance with the operation of the door switch (32) to supply a motor-driving current to the compressor (6) when the door (30) is closed and to stop the supply of the motor-driving current to the compressor when the door (30) is opened.

4. A safety mechanism according to claim 2 or claim 3, wherein, in accordance with the signal from the control unit (16), the power source switching device (20) is switched to the alternating current generator (3) when an engine key switch (17) is in the ON position and to the external power source (40) when the engine key switch (17) is in the OFF position.

5. A safety mechanism according to any of the preceding claims, wherein the door (30) of the connection box (25) is urged in its closed position.

6. A safety mechanism according to any of the preceding claims, wherein the door switch (32) is provided in the connection box (25).

7. A safety mechanism according to any of the preceding claims, wherein the door switch (32) comprises a switch body (33) and an actuator (34) on the connection box (25) and an actuator actuating means (35) on the door (30).

8. A safety mechanism according to any of the preceding claims, wherein the door switch (32) is in its ON position when the door (30) of the connection box (25) is closed and is in its OFF position when the door (30) is open.

9. A refrigerated vehicle container having a safety mechanism according to any of the preceding claims.

# FIG. I

# FIG. 2

# FIG. 3